# DEMANDE DE BREVET EUROPEEN

(11) **EP 3 646 964 A1**
(43) Date de publication de la demande: **06.05.2020**
(21) Numéro de dépôt: 19204842.9
(22) Date de dépôt: 23.10.2019
(51) Int. Cl.: B21F 31/00, F16G 11/02, B21F 15/06, B63B 21/20, B21F 27/08, E04H 17/00, F16G 11/10

(54) **DISPOSITIF DE LIAISON ENTRE DEUX CÂBLES DISPOSÉS PARALLÈLEMENT RÉALISÉ AVEC UN FIL COURBE**

(30) Priorité: 05.11.2018 FR 1860156
(71) Demandeur: NGE Fondations, 69800 Saint Priest (FR)
(72) Inventeur: ROBIT, Philippe, 38450 NOTRE DAME DE COMMIERS (FR)
(74) Mandataire: Chevalier, Renaud Philippe

(57) **Abrégé**

Dispositif de liaison conçu pour agrafer deux câbles parallèles (4) suivant une direction longitudinale, formé avec un fil métallique, comportant symétriquement par rapport à un plan transversal, une boucle (10) disposée dans un plan de boucle perpendiculaire au plan transversal, comprenant un fond de boucle (12) avec des premières parties courbées réalisant un demi-tour, chaque côté de la boucle (10) se prolongeant par un contour ouvert globalement parallèle au plan transversal, qui s'éloigne du plan de boucle pour revenir ensuite en direction du fond de boucle (12), en laissant un passage entre chaque extrémité du fil (28) et le fond de boucle (12).

## Description

La présente invention concerne un dispositif de liaison entre des parties parallèles de deux câbles, ainsi qu'un ensemble comprenant deux câbles maintenus par ce dispositif de liaison, et un filet comprenant des câbles reliés par ces dispositifs de liaison.

Afin de relier deux parties parallèles et jointives de deux câbles entre eux, disposées suivant une direction longitudinale, un dispositif connu, présenté notamment par le document FR-A1-2865517, comporte deux éléments de jonction identiques disposés tête-bêche formant un contour qui enserre ces deux parties parallèles, et les lie fortement pour résister à une traction élevée.

Chaque élément de forme allongée présentant une courbure, comporte à une extrémité une partie annulaire, et à l'autre extrémité une partie cylindrique s'ajustant dans la partie annulaire de l'autre élément afin de former avec ces deux éléments le contour enserrant les deux parties parallèles de câbles.

La forme particulière de chaque élément fait que l'assemblage de ces éléments enserrant les câbles passe par un point de compression radiale de ces câbles, puis par une légère détente donnant une stabilité au montage qui empêche son décrochage.

De plus le contour enserrant les deux parties droites de câble donne avec une traction sur les câbles qui tend à les éloigner dans la direction transversale, un effort de resserrement de l'emboîtage des deux éléments entre eux qui augmente la tenue de cette liaison.

Un tel système de liaison permet en particulier de réaliser des filets résistants, comprenant des câbles qui peuvent être formés par tout élément filaire réalisé en matériaux métalliques, synthétiques ou naturels, comme des câbles métalliques ou des cordes.

Ces filets peuvent servir notamment dans le domaine de la sécurité pour éviter des chutes d'objets ou de personnes, ou dans le domaine des travaux publics. On peut réaliser par exemple des filets résistants appliqués sur une paroi présentant une forte pente, afin d'éviter des chutes de rochers se détachant de cette paroi.

Toutefois ce dispositif de liaison connu nécessite deux pièces, présentant chacune un travail de forge complexe pour former les extrémités annulaire et cylindrique. Le coût de ce dispositif de liaison est élevé.

La présente invention a notamment pour but d'éviter ces inconvénients de la technique antérieure.

Elle propose à cet effet un dispositif de liaison conçu pour agrafer deux câbles parallèles suivant une direction longitudinale, ce dispositif étant remarquable en ce qu'il comprend un fil métallique courbé de façon à comporter, symétriquement par rapport à un plan transversal, une boucle disposée dans un plan de boucle perpendiculaire au plan transversal, comprenant un fond de boucle réalisant un demi-tour, chaque côté de la boucle se prolongeant par un contour ouvert globalement parallèle au plan transversal, qui s'éloigne du plan de boucle pour revenir ensuite en direction du fond de boucle, en laissant un passage entre chaque extrémité du fil et le fond de boucle.

Un avantage de ce dispositif de liaison réside dans le fait qu'il est formé en une seule pièce à partir d'un fil qui est courbé, ce qui rend son usage économique car on obtient un accrochage très résistant entre les deux câbles à l'issue d'un procédé mettant en œuvre uniquement des opérations simples d'introduction des câbles dans les contours ouverts, puis de sertissage autour de ces câbles pour fermer le contour. De plus, suivant l'inclinaison des extrémités du fil entrant dans le fond de boucle, on obtient un effet d'auto-serrage du contour sur les deux câbles qui augmente la tenue du dispositif de liaison.

Le dispositif de liaison selon l'invention peut comporter de plus une ou plusieurs des caractéristiques suivantes, qui peuvent être combinées entre elles.

Avantageusement, chaque contour ouvert comporte successivement après la boucle, une deuxième partie courbée, une deuxième partie droite, une troisième partie courbée, puis une partie droite d'extrémité dirigée vers le fond de boucle.

De plus, la partie droite d'extrémité peut former par rapport au plan de boucle un angle compris entre 20 et 40°.

Avantageusement, le diamètre du fil est constant.

L'invention a aussi pour objet un ensemble comprenant deux câbles maintenus par un dispositif de liaison comprenant l'une quelconque des caractéristiques précédentes, présentant ses deux contours refermés autour des câbles, remarquable en ce que les deux extrémités du fil sont introduites dans le fond de boucle.

Avantageusement, chaque côté du fil comprenant une partie droite d'extrémité, ces parties droites d'extrémité forment par rapport au plan de boucle un angle compris entre 60 et 80°.

Avantageusement, dans les contours fermés les deux câbles sont serrés dans les différentes directions du plan transversal.

Avantageusement, les deux extrémités du fil sont dans la direction longitudinale insérées sans jeu dans le fond de boucle.

Avantageusement, le diamètre du fil est équivalent au diamètre des câbles.

L'invention a de plus pour objet un filet de protection comprenant des câbles d'acier formant des courbes reliées entre elles par des dispositifs de liaison, remarquable en ce que ces dispositifs de liaison comprennent l'une quelconque des caractéristiques précédentes.

L'invention sera mieux comprise et d'autres caractéristiques et avantages apparaîtront plus clairement à la lecture de la description ci-après donnée à titre d'exemple, en référence aux dessins annexés dans lesquels :
- les figures 1 et 2 présentent un dispositif de liaison selon l'invention, successivement après l'introduction des deux câbles et après son sertissage ;
- les figures 3, 4 et 5 présentent ce dispositif de liaison seul avant son sertissage, successivement en vue de côté, en vue de face et en vue de dessus ;
- la figure 6 présente sur une vue de côté la cinématique de fermeture du dispositif de liaison lors de son sertissage ;
- les figures 7, 8 et 9 présentent ce dispositif de liaison après son sertissage autour des câbles, successivement en vue de côté, en vue de face et en vue de dessus ; et
- la figure 10 présente un exemple de filet réalisé à partir de câbles assemblés avec ce dispositif de liaison.

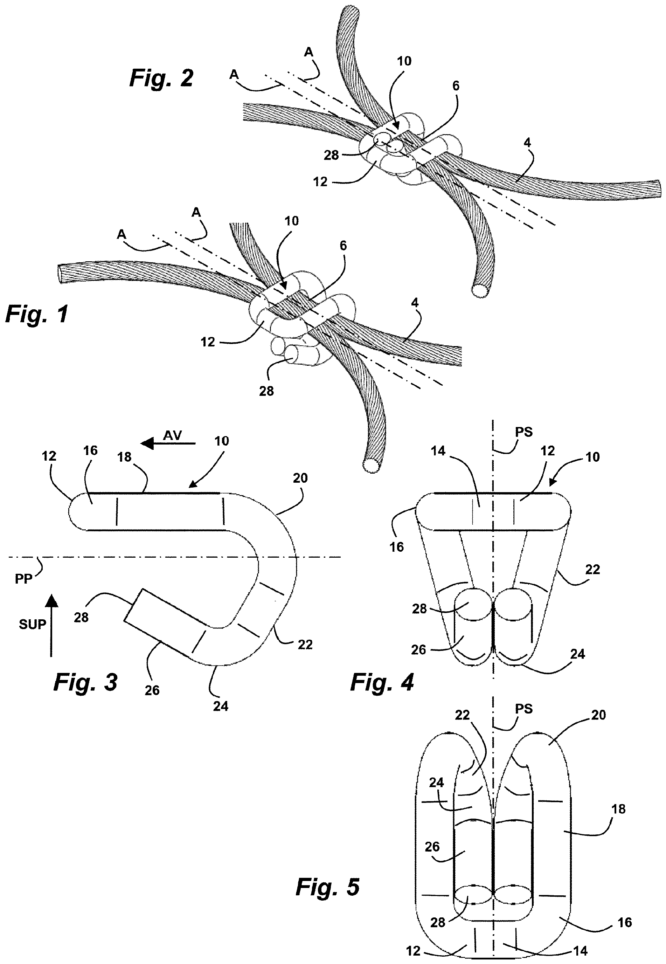

Les figure 1 présente un dispositif de liaison constituant une agrafe formée par un fil métallique courbé de section circulaire constante, comprenant deux côtés formant chacun un contour ouvert se terminant par une extrémité du fil 28, ayant reçu par cette ouverture des parties globalement droites 6 de deux câbles 4, alignées suivant deux axes longitudinaux parallèles A.

La figure 2 présente l'agrafe après son sertissage, les deux extrémités du fil 28 étant introduites dans le fond d'une boucle 12 de ce système disposée dans un plan de boucle, afin de fermer les deux contours autour des deux câbles 4.

Les figures 3, 4 et 5 présentent un plan principal PP passant par les deux axes longitudinaux A, parallèle au plan de boucle, et un plan transversal de symétrie PS perpendiculaire à ces axes longitudinaux. Par convention une flèche AV présente la direction transversale avant disposée suivant l'intersection du plan principal PP et du plan de symétrie PS, et une flèche SUP présente la direction supérieure qui est perpendiculaire au plan principal.

Une boucle plate 10 formée dans un plan parallèle au plan principal PP, au-dessus des deux câbles, comporte du côté avant un fond de boucle 12 comprenant une partie droite de fond de boucle 14 parallèle aux axes longitudinaux A, puis de chaque côté du plan de symétrie PS une première courbe 16 suivant un angle de 90°, et ensuite une première partie droite 18 parallèle à celle de l'autre côté.

Chaque première partie droite 18 se termine vers l'arrière par une deuxième courbe 20 suivant un angle d'environ 120°, tournée vers le bas, qui se prolonge ensuite par une deuxième partie droite 22, se prolongeant à son tour par une troisième courbe 24 tournée vers l'arrière, suivant un angle d'environ 90°. Le fil se prolonge ensuite par une partie droite d'extrémité 26, présentant un angle d'environ 30° par rapport au plan principal PP.

La partie droite d'extrémité 26 se termine par une section transversale plate d'extrémité 28 tournée vers l'avant, qui se trouve en dessous de la face inférieure de la boucle 10 suivant une hauteur égale au diamètre du câble 4 à introduire, et dans la direction transversale un peu en arrière de la partie droite de fond de boucle 14.

Chaque côté de l'agrafe comprenant la deuxième partie droite 22 et la partie droite d'extrémité 26, se trouve dans un plan légèrement incliné par rapport au plan de symétrie PS, ces deux plans inclinés se rapprochant vers le bas de manière à disposer ces parties droites d'extrémité parallèles entre elles, et en contact l'une avec l'autre.

L'agrafe est facile à fabriquer de manière économique à partir d'une bobine de fil d'acier de section constante, qui passe dans une machine automatique réalisant successivement les différentes courbures, puis une coupe de mise à longueur. En particulier pour des câbles 4 de diamètre 10mm, on peut utiliser un fil d'acier présentant un même diamètre de 10mm.

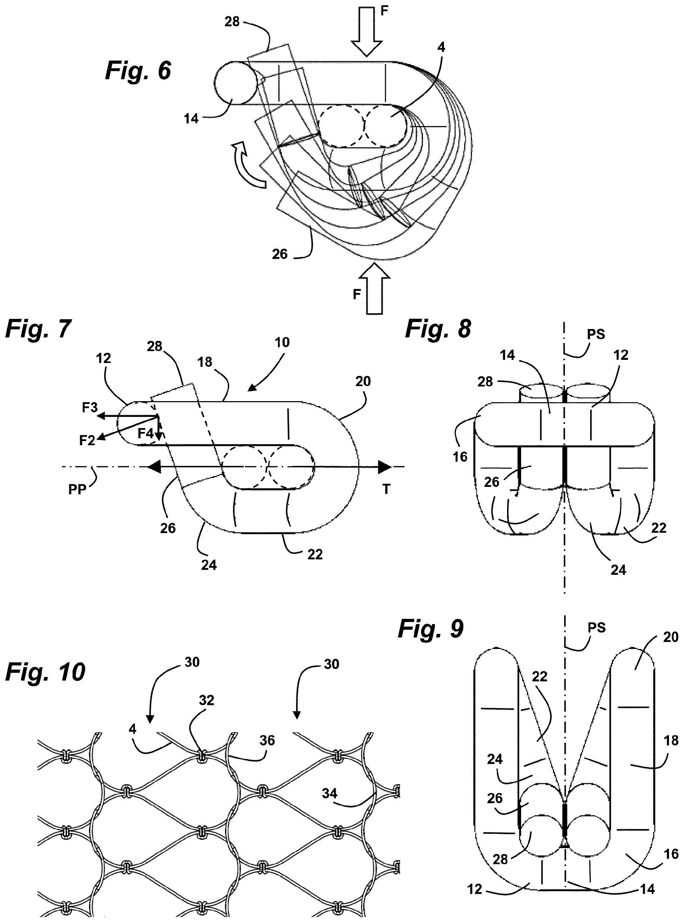

La figure 6 présente le mouvement de sertissage de l'agrafe ayant reçu les deux câbles 4 à l'intérieur, réalisé par une pince qui serre l'ensemble de l'agrafe dans la direction verticale en appliquant une force F.

On obtient de chaque côté de l'agrafe un resserrement de la deuxième courbe 20 recevant le mouvement de flexion le plus important, son rayon intérieur venant progressivement s'enrouler autour du câble 4 le plus en arrière, et une montée progressive de son extrémité avant 28.

Les figures 7, 8 et 9 présentent de chaque côté en fin de sertissage l'extrémité avant du fil 28 qui est passée juste en arrière de la partie droite de fond de boucle 14, pour terminer son mouvement un peu au-dessus de cette partie droite, en formant dans le plan transversal un contour fermé.

On obtient à la fin du sertissage la deuxième partie droite 22 venant sous les deux câbles 4, parallèlement au plan principal PP, et un léger serrage de ces deux câbles dans la largeur et dans la hauteur, leurs contours s'ajustant à l'intérieur de la deuxième courbe 20 et de la troisième courbe 24 qui présentent des rayons intérieurs correspondant sensiblement.

La partie droite d'extrémité 26 présente un angle d'environ 20° par rapport à un axe vertical, qui dans la direction supérieure part vers l'avant.

La longueur de la partie droite de fond de boucle 14 permet dans la direction longitudinale, un ajustement sans jeu des deux extrémités de fil 28 dans ce fond de boucle. De cette manière après le sertissage on obtient des extrémités de fil 28 ajustées dans le fond de boucle, sans possibilité de mouvement dans la direction longitudinale, ce qui donne une grande stabilité à l'agrafe.

Le serrage des deux câbles 4 dans les deux contours fermés de l'agrafe, et leur contact serré l'un sur l'autre dans la direction transversale, donne un accrochage important des câbles l'un avec l'autre pour résister à une traction longitudinale transmise de l'un à l'autre.

La forme particulière de l'agrafe donne un effet d'auto-serrage de son contour fermé lorsqu'on applique dans le plan principal PP une traction T sur les deux câbles, qui tend à éloigner leurs parties parallèles 6 l'une de l'autre. On obtient ce type de traction en particulier dans le cas d'un filet subissant des forces d'étirement, comprenant des mailles fermées par ces agrafes.

La traction T du câble 4 disposé vers l'avant applique sur le début de la partie droite d'extrémité 26 une force perpendiculaire à cette partie droite, tendant à ouvrir le contour fermé, qui se transmet près de l'extrémité du fil 28, avec une force F2 sur la partie droite de fond de boucle 14.

La force F2 appliquée sur la partie droite de fond de boucle 14, avec un angle de 20° par rapport au plan principal PP, se décompose en une force F3 dans la direction avant, et une force F4 tournée vers le bas qui tend à resserrer la boucle 10 vers le bas.

On obtient de cette manière par la traction T sur les câbles 4, un effet d'auto-serrage qui tend à refermer le contour de l'agrafe dans la direction verticale, et à confirmer la position des extrémités du fil 28 qui restent au-dessus de la boucle 10 en évitant une ouverture accidentelle de l'agrafe.

La figure 10 présente un exemple de filet comprenant des colonnes verticales 30 identiques, formées chacune par un câble d'acier continu 4. Chaque câble 4 forme successivement une courbe à droite 34 puis une courbe à gauche 36, deux courbes droite ou gauche successives étant reliées entre elles dans leurs parties la plus large par une agrafe fermée 32 selon l'invention, avec un axe longitudinal horizontal. On obtient pour chaque colonne 30 deux rangées d'agrafes fermées 32.

Chaque courbe droite 34 est insérée dans deux courbes gauches 36 de la colonne 30 se trouvant à sa droite, de manière à former un maillage complet de l'ensemble du filet. On obtient un filet très résistant dans toutes les directions, présentant en particulier une résistance dans la direction verticale donnée par les agrafes fermées 32, qui sont soumis à la force de traction transversale T.

## Revendications

1. Dispositif de liaison conçu pour agrafer deux câbles parallèles (4) suivant une direction longitudinale, **caractérisé en ce qu'**il comprend un fil métallique courbé de façon à présenter, symétriquement par rapport à un plan transversal (PS), une boucle (10) disposée dans un plan de boucle perpendiculaire au plan transversal (PS), comprenant un fond de boucle (12) avec des premières parties courbées (16) réalisant un demi-tour, chaque côté de la boucle (10) se prolongeant par un contour ouvert globalement parallèle au plan transversal (PS), qui s'éloigne du plan de boucle pour revenir ensuite en direction du fond de boucle (12), en laissant un passage entre chaque extrémité du fil (28) et le fond de boucle (12).

2. Dispositif de liaison suivant la revendication 1, **caractérisé en ce que** chaque contour ouvert comporte successivement après la boucle (10), une deuxième partie courbée (20), une deuxième partie droite (22), une troisième partie courbée (24), puis une partie droite d'extrémité (26) dirigée vers le fond de boucle (12).

3. Dispositif de liaison suivant la revendication 2, **caractérisé en ce que** la partie droite d'extrémité (26) forme par rapport au plan de boucle un angle compris entre 20 et 40°.

4. Dispositif de liaison suivant l'une quelconque des revendications précédentes, **caractérisé en ce que** le diamètre du fil est constant.

5. Ensemble comprenant deux câbles (4) maintenus par un dispositif de liaison suivant l'une quelconque des revendications précédentes, présentant ses deux contours refermés autour des câbles (4), **caractérisé en ce que** les deux extrémités du fil (28) sont introduites dans le fond de boucle (12).

6. Ensemble selon la revendication 5, chaque côté du fil comprenant une partie droite d'extrémité (26), **caractérisé en ce que** ces parties droites d'extrémité (26) forment par rapport au plan de boucle un angle compris entre 60 et 80°.

7. Ensemble suivant la revendication 5 ou 6, **caractérisé en ce que** dans les contours fermés les deux câbles (4) sont serrés dans les différentes directions du plan transversal (PS).

8. Ensemble suivant l'une quelconque des revendications 5 à 7, **caractérisé en ce que** les deux extrémités du fil (28) sont dans la direction longitudinale insérées sans jeu dans le fond de boucle (12).

9. Ensemble suivant l'une quelconque des revendications précédentes, **caractérisé en ce que** le diamètre du fil est équivalent au diamètre des câbles (4).

10. Filet de protection comprenant des câbles d'acier (4) formant des courbes (34, 36) reliées entre elles par des dispositifs de liaison (32), **caractérisé en ce que** ces dispositifs de liaison (32) sont selon l'une quelconque des revendications 1 à 4.
